# EUROPÄISCHE PATENTSCHRIFT

(11) **EP 1 355 269 B1**
(45) Veröffentlichungstag und Bekanntmachung des Hinweises auf die Patenterteilung: **07.12.2005**
(21) Anmeldenummer: 03008480.0
(22) Anmeldetag: 11.04.2003
(51) Int. Cl.: G06K 19/073

(54) **Datenverarbeitungsvorrichtung und Verfahren zum Betreiben eines Datenverarbeitungsmoduls**
Data processing device and method of operating a data processing device
Dispositif de traitement de données et méthode de mise en oeuvre d'un dispositif de traitement de données

(30) Priorität: 18.04.2002 DE 10217291
(43) Veröffentlichungstag der Anmeldung: 22.10.2003
(73) Patentinhaber: Infineon Technologies AG, 81669 München (DE)
(72) Erfinder: Klug, Franz, 81737 München (DE); Kniffler, Oliver, 81739 München (DE)
(74) Vertreter: Zinkler, Franz

(56) Entgegenhaltungen:
- EP-A- 1 098 469
- WO-A-00/19353
- DE-A- 19 850 721
- DE-A- 19 936 938
- US-A- 5 404 402
- US-A1- 2001 035 461

## Beschreibung

Die vorliegende Erfindung bezieht sich auf Datenverarbeitungsvorrichtungen und insbesondere auf Datenverarbeitungsvorrichtungen zum Verarbeiten sicherheitsrelevanter Daten.

Datenverarbeitungsvorrichtungen werden mehr und mehr zum Verarbeiten sicherheitsrelevanter Daten eingesetzt. Ein Grund hierfür ist die zunehmende Verbreitung von Chipkarten, auf denen personenbezogene Daten gespeichert sind, oder die zum Abwickeln finanzieller Transaktionen eingesetzt werden. Solche Chipkarten umfassen einen Chip, der entweder von einem Terminal, in den die Chipkarte geschoben wird, mit Leistung versorgt wird oder der eine eigene Leistungsversorgung in Form einer Batterie hat. Alternativ existieren Chipkarten für Kontaktlos-Anwendungen, die zwar selbst keine eigene Leistungsversorgung haben, die jedoch die Energie zum Betrieb aus einem sie umgebenden elektromagnetischen Feld beziehen.

Die von solchen Datenverarbeitungsvorrichtungen durchgeführten Verschlüsselungs- und Entschlüsselungsaufgaben sind typischerweise kryptographische Algorithmen, durch die geheime Daten vor Angreifern geschützt werden können. Wenn beispielsweise an eine Geldkarte gedacht wird, so muß es selbstverständlich unmöglich gemacht werden, daß ein Angreifer unbefugt den durch die Geldkarte zur Verfügung gestellten Geldbetrag erhöht. Andererseits muß auch sichergestellt werden, daß ein Terminal, der von einer Geldkarte abbucht, nur den vereinbarten Betrag abbucht, jedoch nicht einen höheren Betrag zu Lasten des Inhabers der Chipkarte.

Die Sicherheit für solche Anwendungen wird typischerweise von den kryptographischen Algorithmen geliefert, wie z. B. dem RSA-Algorithmus als Beispiel für ein unsymmetrisches Verschlüsselungsverfahren oder dem DES-Algorithmus als Beispiel für ein symmetrisches Verschlüsselungsverfahren.

Mögliche Angriffe auf solche Chipkarten bestehen in dem Ausprobieren aller erdenklichen Möglichkeiten und dem Auswerten der dabei erhaltenen Ergebnisse. Diese sogenannten "Brute-Force"-Angriffe werden typischerweise dadurch abgewehrt, daß kryptographische Algorithmen zusammen mit langen Zahlen verwendet werden, so daß ein solcher Angriff astronomische Zeiten in Anspruch nehmen wird, um zum Erfolg zu kommen.

Alternative Angriffe auf Datenverarbeitungsvorrichtungen für sicherheitsrelevante Daten bestehen in indirekten Maßnahmen. Eine Datenverarbeitungsvorrichtung wird in Betrieb gesetzt, und es wird z. B. der Leistungsverbrauch oder die elektromagnetische Abstrahlung oder die Zeit ermittelt, die für eine Aufgabe benötigt wird. Dann wird dieselbe Aufgabe, jedoch mit veränderten Eingangsdaten durchgeführt, und es werden wieder indirekte Daten, wie z. B. die Leistungsaufnahme der Datenverarbeitungsvorrichtung, gemessen. Wird diese Maßnahme mit verschiedenen Eingangsdaten beliebig oft wiederholt, so kann anhand statistischer Auswertungen eine Menge an Informationen aus einer Datenverarbeitungsvorrichtung erhalten werden, die gegen solche indirekte Angriffe nicht geschützt ist. Ein bekannter Vertreter solcher indirekter Angriffe ist die differentielle Leistungsanalyse oder DPA (DPA = Differential Power Analysis), bei der mittels statistischer Auswertung des Stromprofils bzw. des Leistungsverbrauchs Informationen über den Programmfluß einer Aufgabe, die von einer Datenverarbeitungsvorrichtung abgearbeitet wird, erhalten werden sollen.

Eine bekannte Maßnahme gegen solche indirekten Angriffe besteht darin, daß die Datenverarbeitungsvorrichtung, die eines oder typischerweise mehrere Datenverarbeitungsmodule aufweist, einen möglichst konstanten, d. h. homogenen, Stromverbrauch aufweist, selbst wenn keine Tätigkeit durchgeführt wird. Eine Datenverarbeitungsvorrichtung umfaßt als Datenverarbeitungsmodule typischerweise eine CPU, einen oder mehrere Krypto-Coprozessoren, einen Zufallszahlengenerator, eine Eingabe/Ausgabe-Vorrichtung, die auch als UART (UART = Universal Asynchronous Receive Transmit) bekannt ist, ein Speicherverwaltungssystem zur Verwaltung der verfügbaren Speicher, die beispielsweise als virtueller Speicher organisiert sein können, etc.

Selbstverständlich werden während der Abarbeitung einer Aufgabe durch die Datenverarbeitungsvorrichtung nicht immer alle Datenverarbeitungsmodule gleichzeitig benötigt. Typischerweise wird zu einem Zeitpunkt immer nur ein Datenverarbeitungs-modul oder, wenn ein paralleler Betriebsmodus vorliegt, einige wenige der verfügbaren Datenverarbeitungsmodule benötigt. So befindet sich die CPU beispielsweise im Leerlauf, wenn die CPU vom Speicherverwaltungsmodul einen externen Speicherzugriff angefordert hat. Die CPU kann ihre Arbeit erst fortsetzen, wenn die vom externen Speicher angeforderten Daten der CPU vom Speicherverwalter bzw. vom virtuellen Speichersystem (VMS; VMS = Virtual Memory System) bereitgestellt werden.

Eine Datenverarbeitungsvorrichtung, die keine Gegenmaßnahmen gegen eine Leistungsanalyse hat, würde zu dem Zeitpunkt, zu dem die CPU arbeitet, eine hohe Leistung verbrauchen und dann, während des externen Speicherzugriffs relativ wenig Leistung verbrauchen und dann, wenn die Daten vom externen Speicher der CPU bereitgestellt worden sind, wieder viel Leistung verbrauchen.

In bestimmten sicheren Anwendungen ist es ein Sicherheitsleck, wenn solche Informationen nach außen dringen. Daher wird hier die CPU derart betrieben, daß sie in der Zeitdauer, zu der der externe Speicherzugriff stattfindet, sogenannte Dummy-Operationen ausführt, die für die eigentliche Aufgabe der Datenverarbeitungsvorrichtung ohne Bedeutung sind, die jedoch den Effekt haben, daß die CPU auch in der Zeitdauer, in der die CPU eigentlich nichts zu tun hat, Leistung verbraucht. Ein durch Dummy-Operationen homogenisiertes Leistungsprofil der Datenverarbeitungsvorrichtung kann daher nicht mehr ohne weiteres "abgehört" werden und ist somit zumindest sicherer gegenüber DPA-Angriffen als eine Datenverarbeitungsvorrichtung ohne derlei Maßnahmen.

Nachteilig an diesem Sicherheitskonzept ist die Tatsache, daß der Stromverbrauch der Datenverarbeitungsvorrichtung signifikant höher ist als er eigentlich sein müßte. Würde die CPU zu dem Zeitpunkt, zu dem sie nicht benötigt wird, also während eines externen Speicherzugriffs beispielsweise, keine Dummy-Operationen ausführen, also wenig Leistung verbrauchen oder sogar in einen Sleep-Modus versetzt werden, bei dem sie noch weniger oder überhaupt keine Leistung verbraucht, so könnte der Leistungsverbrauch der Datenverarbeitungsvorrichtung deutlich reduziert werden. Ein reduzierter Leistungsverbrauch wird insbesondere für Datenverarbeitungsvorrichtungen mit eigener Batterie im Sinne einer langen Lebensdauer der Batterie bevorzugt. Andererseits stellt der Leistungsverbrauch einer Datenverarbeitungsvorrichtung auch dann eine ernsthafte Begrenzung dar, wenn die Datenverarbeitungsvorrichtung auf einer Chipkarte für Kontaktlos-Anwendungen vorgesehen ist. In solchen Kontaktlos-Anwendungen wird die Energie, die die Datenverarbeitungsvorrichtung zum Betrieb benötigt, allein aus dem umgebenden HF-Feld bezogen und ist somit inhärent begrenzt.

Der Verzicht auf Dummy-Operationen bzw. sogar das Einführen eines Schlaf-Modus (Sleep-Modus) für ein Datenverarbeitungsmodul führen somit zu einem im Hinblick auf den Energieverbrauch optimalen Lösung, jedoch zu einer Unsicherheit im Hinblick auf indirekte Angriffe, da sich ein ausgeprägtes Stromprofil ergibt, aus dem Informationen über geheime Sachverhalte abgezogen werden können.

Die EP 1098469 A1 offenbart eine Codiervorrichtung zur Realisierung einer kryptographischen Verschlüsselung und/oder Zugangsberechtigung mit einer Datenverarbeitungseinheit, einer Abkopplungseinheit, einer Stromversorgungsschnittstelle und einer Haupttaktversorgungseinheit. Ferner ist ein Stromprofilgenerator vorgesehen, der, gesteuert durch einen zweiten Programmoszillator, ein Stromprofil erzeugt und dem Stromprofil der Datenverarbeitungseinheit überlagert, so daß ein Angriff mittels Korrelationsanalyse des Stromprofils abgewehrt wird. Die Datenverarbeitungseinheit wird ferner über einen Programmoszillator mit einem Betriebstakt versorgt, wobei der Betriebstakt abhängig von einem Zufallszahlengenerator variiert wird. Die Stromprofilgeneratoreinheit ist abschaltbar ausgestaltet, wobei eine solche Abschaltung bei nicht sicherheitsrelevanten Operationen durchgeführt wird. Damit läßt sich der Stromverbrauch der Codiervorrichtung verringern. Die Aufgabe der vorliegenden Erfindung besteht darin, eine sichere und leistungssparende Datenverarbeitungsvorrichtung sowie ein sicheres und leistungssparendes Verfahren zum Betreiben eines Datenverarbeitungsmoduls zu schaffen.

Diese Aufgabe wird durch eine Datenerfassungsvorrichtung nach Patentanspruch 1 oder durch ein Verfahren zum Betreiben eines Datenverarbeitungsmoduls nach Patentanspruch 15 gelöst.

Der vorliegenden Erfindung liegt die Erkenntnis zugrunde, daß die scheinbar gegenläufigen Ziele nach Sicherheit gegenüber DPA-Angriffen einerseits, also einem homogenen Stromprofil, und nach einer Datenverarbeitungsvorrichtung mit reduziertem Leistungsverbrauch andererseits, also einem inhomogenen Stromprofil, dadurch in Einklang gebracht werden können, daß ein Datenverarbeitungsmodul einer Datenverarbeitungsvorrichtung in der Tat in einen Betriebsmodus mit reduzierter Leistung oder mit einem Leistungsverbrauch von 0 versetzt wird, wobei dieses Versetzen in den Reduziert-Betriebsmodus stattfindet, wenn das Datenverarbeitungs-Modul in den Reduziert-Betriebsmodus versetzbar ist, wobei jedoch zusätzlich das Versetzen des Datenverarbeitungsmoduls in den Reduziert-Betriebsmodus nur stattfindet, wenn ferner ein zeitlich variierendes Steuersignal, das vorzugsweise ein Zufallssignal ist, eine vorbestimmte Bedingung erfüllt.

Das Datenverarbeitungsmodul wird somit erfindungsgemäß abhängig von dem Steuersignal zwischen verschiedenen Betriebsmodi, zu denen auch ein Hoch-Betriebsmodus gehören kann, bei dem der Leistungsverbrauch höher als im Normal-Modus ist, hinund hergeschaltet. Damit wird das Leistungsprofil randomisiert, und wird durch Einsetzen des Reduziert-Betriebsmodus zusätzlich Leistung gespart.

Erfindungsgemäß wird somit nicht jedes Mal, wenn es möglich wäre, ein Reduzier-Betriebsmodus, bei dem ein Leistungsverbrauch eines Datenverarbeitungsmoduls vorliegt, der kleiner ist als der Leistungsverbrauch in einem Normal-Betriebsmodus oder der, wenn vollständig abgeschaltet wird, gleich 0 ist, eingesetzt. Andererseits wird auch nicht immer beim Normal-Betriebsmodus geblieben, wie es für ein homogenes Leistungsprofil eigentlich erwünscht sein würde. Erfindungsgemäß wird ein Zwischenweg gewählt, derart, daß abhängig von dem zeitlich variierenden Steuersignal nur dann, wenn dieses Steuersignal eine vorbestimmte Bedingung erfüllt, der Reduziert-Betriebsmodus eingesetzt wird.

Die erfindungsgemäße Datenverarbeitungsvorrichtung zeigt somit einen im Vergleich zu dem Fall, bei dem immer, wenn es möglich ist, der Reduziert-Betriebsmodus eingesetzt wird, erhöhten Leistungsverbrauch, der jedoch geringer ist als der Leistungsverbrauch im Falle eines homogenisierten Leistungsverbrauchs, der erreicht wird, wenn Dummy-Operationen eingesetzt werden.

Die erfindungsgemäße Datenverarbeitungsvorrichtung ist somit dahingehend vorteilhaft, daß sie einen reduzierten Leistungsverbrauch bei erhöhter Sicherheit liefert. Dies wird dadurch erreicht, daß für einen Angreifern nicht nachvollziehbar einige Male während der Abarbeitung einer Aufgabe durch die Datenverarbeitungsvorrichtung abhängig von dem zeitlich variierenden Steuersignal auf den Reduziert-Betriebsmodus verzichtet wird.

Bei einem bevorzugten Ausführungsbeispiel der vorliegenden Erfindung ist das Steuersignal eine Folge von Zufallszahlen. Wenn beispielsweise bei einem Zufallsbit, das einen logischen Zustand von "0" darstellt, definiert wird, daß die vorbestimmte Bedingung nicht erfüllt ist, so werden nur 50% der Möglichkeiten genutzt, bei denen auf den Reduziert-Betriebsmodus gegangen werden kann, jedoch mit dem Vorteil, daß der Leistungsverbrauch zwar reduziert ist, jedoch für verschiedene Durchläufe, d. h. verschiedene Abarbeitungen derselben Aufgabe durch die Datenverarbeitungsvorrichtung, unkorreliert ist.

Ein Vorteil der vorliegenden Erfindung besteht darin, daß die Datenverarbeitungsvorrichtung je nach erwünschter Sicherheitsstufe skalierbar ist. Für weniger sicherheitskritische Fälle, bei denen jedoch dennoch eine gewisse Sicherheitsstufe erfüllt werden muß, kann das zeitlich variierende Steuersignal dahingehend erzeugt werden, daß z. B. 90% der Möglichkeiten für den Reduziert-Betriebsmodus genutzt werden, während bei wieder anderen Anwendungen, bei denen eine hohe Sicherheitsstufe nötig ist, 50% der Möglichkeiten für den Reduziert-Betriebsmodus nicht genutzt werden, oder sogar noch mehr als 50% der Möglichkeiten nicht genutzt werden, was in einem immer homogeneren Stromprofil resultiert.

Insbesondere in den Fällen, bei denen mehrere Datenverarbeitungsmodule zu einer Datenverarbeitungsvorrichtung gehören, und bei denen mehrere Datenverarbeitungsmodule gleichzeitig in den Reduziert-Betriebsmodus gehen könnten, wird bei einem bevorzugten Ausführungsbeispiel der vorliegenden Erfindung eine maximale Leistungsersparnis dadurch erreicht, daß abhängig von dem zeitlich variierenden Steuersignal in unterschiedlichen Zeitpunkten alle möglichen Datenverarbeitungsmodule in den Reduziert-Betriebsmodus versetzt werden, oder daß lediglich ein paar Datenverarbeitungsmodule reduziert arbeiten, während die anderen im Normal-Betriebsmodus bleiben. Das zeitlich variierende Steuersignal stellt sicher, daß für verschiedene Durchläufe derselben Aufgabe auf derselben Datenverarbeitungsvorrichtung zu bestimmten Programmzeitpunkten unterschiedliche Datenverarbeitungsmodule im Reduziert-Betriebsmodus sind, so daß differentielle Leistungsattacken als Beispiel für indirekte Angriffe scheitern werden.

Bevorzugte Ausführungsbeispiele der vorliegenden Erfindung werden nachfolgend Bezug nehmend auf die beiliegenden Zeichnung detailliert erläutert. Es zeigt:

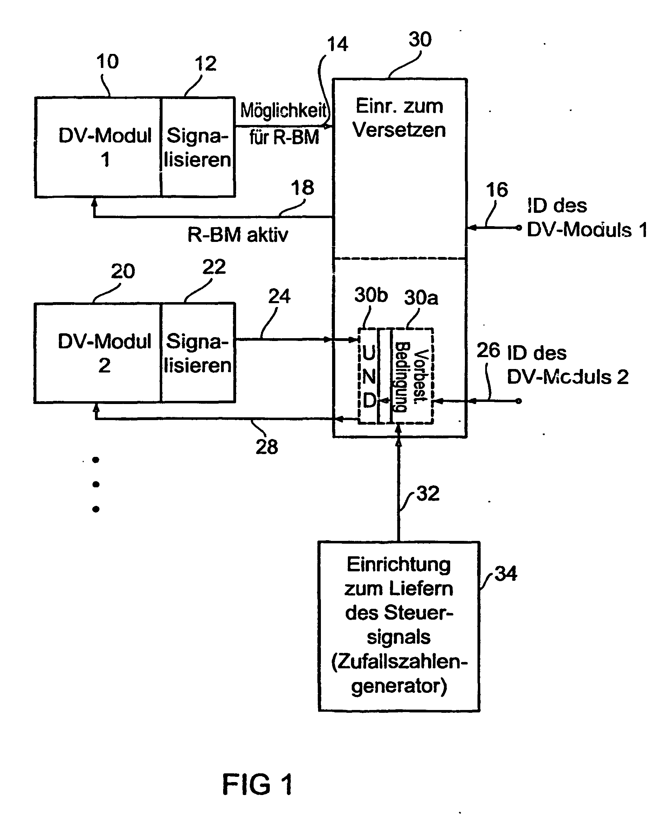

- Fig. 1: ein Blockschaltbild eines bevorzugten Ausführungsbeispiels der vorliegenden Erfindung.
Fig. 1 zeigt eine erfindungsgemäße Datenverarbeitungsvorrichtung mit einem ersten Datenverarbeitungsmodul 1 (10) und einem zweiten Datenverarbeitungsmodul 2 (20). Jedem Datenverarbeitungsmodul ist eine Einrichtung 12 bzw. 22 zum Signalisieren einer Möglichkeit, daß das Datenverarbeitungsmodul in den Reduziert-Betriebsmodus versetzbar ist, zugeordnet. Die Einrichtung 12 bzw. 22 liefert über eine Signalisierungsleitung 14 bzw. 24 ein Signal, das diese Möglichkeit anzeigt, zu einer Einrichtung 30 zum Versetzen des entsprechenden Datenverarbeitungsmoduls 10 bzw. 20 in den Reduziert-Betriebsmodus, wobei die Einrichtung 30 zum Versetzen ausgebildet ist, um das entsprechende Datenverarbeitungsmodul in den Reduziert-Betriebsmodus zu versetzen, wenn die Einrichtung 12 bzw. 22 zum Signalisieren die Möglichkeit signalisiert und ein Steuersignal auf einer Steuersignalleitung 32 eine vorbestimmte Bedingung erfüllt. Das Steuersignal wird von einer Einrichtung 34 zum Liefern des Steuersignals auf die Steuersignalleitung 32 gelegt, wobei die Einrichtung 34 zum Liefern des Steuersignals ausgebildet ist, um ein zeitlich variierendes Steuersignal zu liefern, das bei einem bevorzugten Ausführungsbeispiel der vorliegenden Erfindung von einem Zufallszahlengenerator stammt.

Bei einer Datenverarbeitungsvorrichtung, wie sie beispielsweise auf einer Chipkarte implementiert sein kann, existieren z. B. verschiedene Datenverarbeitungsmodule, wie z. B. eine CPU (CPU = Central Processing Unit), einer oder mehrere Krypto-Coprozessoren, ein Speicherverwaltungssystem zum Verwalten eines flüchtigen und/oder nicht-flüchtigen externen Speichers, ein UART, ein Zufallszahlengenerator etc. Sämtliche solche Datenverarbeitungsmodule haben einen Normal-Betriebsmodus mit einem Normal-Leistungsverbrauch und können auch in einem Reduziert-Betriebsmodus betrieben werden, wobei ein Leistungsverbrauch des Datenverarbeitungs-Moduls in dem Reduziert-Betriebsmodus kleiner als ein Leistungsverbrauch in dem Normal-Betriebsmodus ist oder, wenn das Datenverarbeitungs-Modul in dem Reduziert-Betriebsmodus vollständig abgeschaltet wird, gleich 0 ist.

Umfaßt die Datenverarbeitungsvorrichtung lediglich ein Datenverarbeitungs-Modul, das in den Reduziert-Betriebsmodus versetzbar ist, so ist die Einrichtung 34 zum Liefern des Steuersignals vorzugsweise derart ausgebildet, daß sie eine Folge von zufällig verteilten binären Einsen und Nullen liefert, und daß dann, wenn die Einrichtung zum Signalisieren eine Möglichkeit für einen Reduziert-Betriebsmodus signalisiert, das Datenverarbeitungssignal durch die Einrichtung zum Versetzen 30 in den Reduziert-Betriebsmodus versetzt wird, wenn das Steuersignal z. B. eine logische "1" hat, während auf einen Reduziert-Betriebsmodus verzichtet wird, wenn eine gerade aktuell vorhandene Zufallszahl eine logische "0" ist.

Existieren mehrere Datenverarbeitungs-Module in der Datenverarbeitungsvorrichtung, die in einen Reduziert-Betriebsmodus versetzt werden können, wie es in Fig. 1 gezeigt ist, so wird es bevorzugt, der Einrichtung 30 zum Versetzen eine Identifikation (ID) jedes Datenverarbeitungsmoduls über eine Identifikationsleitung 16 bzw. 26 zuzuführen. Eine bevorzugte Implementation würde darin bestehen, daß eine erste logische Schaltung 30a überprüft, ob die vorbestimmte Bedingung zwischen dem Steuersignal und der Identifikation des zugeordneten Datenverarbeitungsmoduls existiert, um dann das Ergebnis der Überprüfung der vorbestimmten Bedingung mit einem UND-Gatter 30b mit dem Ausgangssignal der Signalisierungseinrichtung 22 zu verknüpfen. Ein Reduziert-Betriebsmodus-Aktiv-Signal auf einer Ausgangsleitung 28 bzw. 18 wird sich dann nur ergeben, wenn sowohl eine Möglichkeit für den Reduziert-Betriebsmodus besteht als auch die vorbestimmte Bedingung des Steuersignals, also daß dasselbe eine vorbestimmte Beziehung zu der Identifikation des Datenverarbeitungsmoduls hat, erfüllt ist.

Ein Beispiel, bei dem die CPU einer Datenverarbeitungsvorrichtung in den Reduziert-Betriebsmodus versetzt werden kann, liegt dann vor, wenn die CPU in ihrem internen Speicher bestimmte Informationen nicht vorfindet und somit die Speicherverwaltungseinheit anweist, einen externen Speicherzugriff durchzuführen, um die benötigten Informationen vom externen Speicher in den internen Speicher zu laden. Dieser Ladevorgang wird eine bestimmte Zeit dauern, in der die CPU im Reduziert-Betriebsmodus, der auch als "Power-Suspend-Modus" bezeichnet wird, versetzt werden kann, um Leistung zu sparen. Die Einrichtung 12 zum Signalisieren der Möglichkeit eines Reduziert-Betriebsmodus ist in diesem Fall durch den Teil der CPU realisiert, der die Anforderung an die Speicherverwaltungseinheit ausgibt, einen externen Speicherzugriff zu starten. Die Anforderung selbst stellt damit das Signal dar, das auf der Leitung 14 von Fig. 1 zur Einrichtung 30 zum Versetzen des Datenverarbeitungsmoduls in den Reduziert-Betriebsmodus übertragen wird.

In einem alternativen Fall kann das Reduziert-Betriebsmodus-Management auch zentral getrennt von den einzelnen Datenverarbeitungs-Modulen durchgeführt werden, derart, daß nicht jedes Datenverarbeitungs-Modul seine eigene Signalisierungseinheit hat, sondern daß eine zentrale Signalisierungseinheit für sämtliche einzelnen Datenverarbeitungs-Module existiert.

Erfindungsgemäß wird die Leistungsabschaltung bzw. das Versetzen in den Reduziert-Betriebsmodus nicht deterministisch bei jedem Anlaß, d. h. bei jeder Möglichkeit, durchgeführt. Statt dessen erfolgt die Abschaltung zeitlich variabel und vorzugsweise nach nicht deterministischen Regeln. Diese nicht deterministischen Regeln können am besten durch eine Zufallszahl erzeugt werden, so daß der Programmfluß so massiv zwischen einzelnen Durchläufen der Datenverarbeitungsvorrichtung, also zwischen einzelnen Abarbeitungen derselben Aufgabe möglicherweise mit geänderten Eingangsparametern, variiert, so daß sogar alle möglichen Reduziert-Betriebsmodi ausgenutzt werden können. Diese sind nur mit erhöhtem Rechenaufwand statistisch herauszufiltern, sofern dies überhaupt noch möglich ist.

Hierzu weist die Einrichtung 34 zum Liefern einen physikalischen Zufallszahlengenerator auf, der vorzugsweise ein physikalischer Zufallszahlengenerator ist, der auf einem physikalischen Rauschprozeß, wie z. B. einem thermischen Rauschen eines Widerstands oder einem Schrotrauschen einer Diode, basiert.

Die randomisierte Abschaltung der CPU macht Sinn, wenn die Anfangssequenz betrachtet wird. Während des ersten sogenannten Page-Table-Walks (PTW) verhält sich die CPU noch deterministisch. Eine Abschaltung der CPU während diesem initialen PTW wäre bei einer DPA sofort meßbar. Daher wird es bevorzugt, von vorneherein eine Abschaltung der CPU, also ein Versetzen der CPU in den Reduziert-Betriebsmodus während des ersten PTW generell zu unterbinden und erst bei späteren Möglichkeiten in den Reduziert-Betriebsmodus - abhängig von dem zeitlich variierenden Steuersignal - zu gehen.

Durch Randomisieren der Reduziert-Betriebsmodus-Aktivierung und durch Randomisieren der Abschaltung des Reduziert-Betriebsmodus wird somit eine wesentliche Reduzierung des Stromverbrauchs erreicht, wobei jedoch Sicherheitsanforderungen an eine Hochsicherheitsschaltung beibehalten werden.

Wie es bereits ausgeführt worden ist, wird es bevorzugt, die Reduziert-Betriebsmodus-Steuerung mittels einer Zufallszahl durchzuführen. Wird von der CPU ein externer Speicherzugriff ausgelöst, dann wird bei diesem bevorzugten Ausführungsbeispiel der vorliegenden Erfindung der Reduziert-Betriebsmodus in Abhängigkeit von der Zufallszahl aktiviert. Die CPU erkennt anhand eines Handshake-Signals von der Speicherverwaltungseinheit, die als VMS (VMS = Virtual Memory System) ausgeführt ist, daß der Speicherzugriff abgeschlossen ist und die Daten nun zur CPU geliefert werden. Die Einrichtung 30 zum Versetzen des Datenverarbeitungsmoduls in den Reduziert-Betriebsmodus wird somit die Reduziert-Betriebsmodus-Aktiv-Leitung 80 bzw. 28 wieder deaktivieren, um die CPU wieder in den Normal-Betriebsmodus zu versetzen, damit die von dem externen Speicher gelieferten Daten normal weiterverarbeitet werden können. Wenn nun in Abhängigkeit von einer Zufallszahl die CPU in einen Power-Suspend-Modus wechselt und das VMS den erfolgreichen Abschluß des Memoryzugriffs durch eine weitere Zufallszahl verzögert meldet und dann die Daten bereitstellt, wird bei jedem Durchlauf der Programmfluß so verändert, daß diese so randomisierten Reduziert-Betriebsmodus-Perioden nicht mittels einer DPA erkannt werden können.

Es sei darauf hingewiesen, daß das erfindungsgemäße Konzept nicht auf die Abschaltung einer CPU als Beispiel für ein Datenverarbeitungsmodul begrenzt ist, sondern daß dieses Konzept auf sämtliche Datenverarbeitungsmodule anwendbar ist, die in einem Reduziert-Betriebsmodus betreibbar sind, und bei dem die Möglichkeit, daß sie in einen Reduziert-Betriebsmodus versetzbar sind, signalisierbar ist, und die mit anderen Datenverarbeitungsmodulen dahingehend interagieren, daß sie auf die Lieferung von Daten von einem anderen Datenverarbeitungsmodul warten müssen, bevor sie mit ihrer eigenen Tätigkeit fortfahren können.

### Bezugszeichenliste

- 10: Datenverarbeitungsmodul 1
- 12: Einrichtung zum Signalisieren
- 14: Signal zum Anzeigen einer Möglichkeit für den Reduziert-Betriebsmodus
- 16: Identifikation des Datenverarbeitungs-Moduls 1
- 18: Reduziert-Betriebsmodus-Aktiv-Signal
- 20: Datenverarbeitungsmodul 2
- 22: Einrichtung zum Signalisieren
- 24: Signal zum Anzeigen einer Möglichkeit für den Reduziert-Betriebsmodus
- 26: Identifikation des Datenverarbeitungs-Moduls 1
- 28: Reduziert-Betriebsmodus-Aktiv-Signal
- 30: Einrichtung zum Versetzen
- 30a: Einrichtung zum Überprüfen der vorbestimmten Bedingung
- 30b: UND-Gatter
- 32: Steuersignalleitung
- 34: Einrichtung zum Liefern des Steuersignals

## Patentansprüche

1. Datenverarbeitungsvorrichtung mit folgenden Merkmalen:
einem Datenverarbeitungsmodul (10, 20), das in einem ersten Betriebsmodus mit einem ersten Leistungsverbrauch und einem zweiten Betriebsmodus betreibbar ist, wobei ein zweiter Leisetungsverbrauch des Datenverarbeitungsmoduls in dem zweiten Betriebsmodus kleiner als der erste Leistungsverbrauch ist oder gleich 0 ist;
einer Einrichtung (34) zum Liefern eines zeitlich variierenden Steuersignals; und
einer Einrichtung (30) zum Versetzen des Datenverarbeitungsmoduls (10, 20) von einem Betriebsmodus in den anderen Betriebsmodus,
**dadurch gekennzeichnet,**
**dass** die Datenverarbeitungsvorrichtung eine Einrichtung (12, 22) zum Signalisieren einer Möglichkeit aufweist, dass das Datenverarbeitungsmodul (10, 20) von einem Betriebsmodus in den anderen Betriebsmodus versetzbar ist; und
**dass** die Einrichtung (30) zum Versetzen ausgebildet ist, um das Datenverarbeitungsmodul nur dann in den anderen Betriebsmodus zu versetzen, wenn die Einrichtung (12, 22) zum Signalisieren die Möglichkeit signalisiert und das Steuersignal eine vorbestimmte Bedingung erfüllt.

2. Datenverarbeitungsvorrichtung nach Anspruch 1,
bei der die Einrichtung (34) zum Liefern ausgebildet ist, um als Steuersignal eine Folge von Zufallszahlen zu liefern.

3. Datenverarbeitungsvorrichtung nach Anspruch 1 oder 2,
bei der die Einrichtung (34) zum Liefern ausgebildet ist, um ein Steuersignal mit einer Mehrzahl von unterschiedlichen logischen Zuständen zu liefern, und
wobei die Einrichtung (30) zum Versetzen ausgebildet ist, als vorbestimmte Bedingung einen logischen Zustand der Mehrzahl von logischen Zuständen zu verwenden.

4. Datenverarbeitungsvorrichtung nach einem der vorhergehenden Ansprüche,
bei der die Einrichtung (30) zum Versetzen ausgebildet ist, um bei einer Signalisierung der Möglichkeit ein Steuersignal anzufordern oder ein aktuell vorliegendes Steuersignal zu verwenden, um festzustellen, ob die vorbestimmte Bedingung erfüllt ist.

5. Datenverarbeitungsvorrichtung nach einem der vorhergehenden Ansprüche,
die ferner ein weiteres Datenverarbeitungs-Modul (20) aufweist, das in einem Normal-Betriebsmodus mit einem Normal-Leistungsverbrauch und einem Reduziert-Betriebsmodus betreibbar ist, wobei ein Leistungsverbrauch des weiteren Datenverarbeitungsmoduls (20) in dem Reduziert-Betriebsmodus kleiner als der Normal-Leistungsverbrauch ist oder gleich 0 ist;
die ferner eine weitere Einrichtung (22) zum Signalisieren einer Möglichkeit, dass das weitere Datenverarbeitungsmodul (20) von einem Modus in den anderen Betriebsmodus versetzbar ist, aufweist, und
die ferner eine weitere Einrichtung (30) zum Versetzen aufweist, um das weitere Datenverarbeitungsmodul in den anderen Betriebsmodus zu versetzen, wenn die weitere Einrichtung zum Signalisieren die Möglichkeit signalisiert und das Steuersignal eine vorbestimmte Bedingung erfüllt.

6. Datenverarbeitungsvorrichtung.nach Anspruch 5,
bei der jedem Datenverarbeitungsmodul eine eigene Datenverarbeitungs-Modul-Identifikation (16, 26) zugeordnet ist, und
bei der die Einrichtung (30) zum Versetzen ausgebildet ist, um zu überprüfen, ob das Steuersignal eine vorbestimmte Beziehung zu der Datenverarbeitungs-Modul-Identifikation hat, so dass die vorbestimmte Bedingung für das Datenverarbeitungsmodul mit der Datenverarbeitungs-Modul-Identifikation erfüllt ist.

7. Datenverarbeitungsvorrichtung nach einem der vorhergehenden Ansprüche, bei der das Datenverarbeitungsmodul (10, 20) eine CPU ist, und
bei der die Einrichtung (12) zum Signalisieren der Möglichkeit ausgebildet ist, um eine Möglichkeit zu signalisieren, wenn die CPU einen externen Speicherzugriff aktiviert.

8. Datenverarbeitungsvorrichtung nach einem der vorhergehenden Ansprüche,
bei der die Einrichtung (12, 22) zum Signalisieren ferner ausgebildet ist, um ein Ende des anderen Betriebsmodus zu signalisieren, und
bei der die Einrichtung (30) zum Versetzen ausgebildet ist, um bei einem signalisierten Ende des anderen Betriebsmodus das Datenverarbeitungs-Modul in den einen Betriebsmodus zu versetzen.

9. Datenverarbeitungsvorrichtung nach einem der vorhergehenden Ansprüche,
die ausgebildet ist, um eine Datenverarbeitungsaufgabe in mehreren zeitlich aufeinanderfolgenden Durchläufen durchzuführen, und
wobei die Einrichtung (34) zum Liefern ausgebildet ist, um das Steuersignal für verschiedenen Durchläufe unterschiedlich zu liefern.

10. Datenverarbeitungsvorrichtung nach einem der vorhergehenden Ansprüche,
bei der die Einrichtung (34) zum Liefern einen physikalischen Zufallszahlengenerator aufweist.

11. Datenverarbeitungsvorrichtung nach Anspruch 10,
bei der der physikalische Zufallszahlengenerator auf einen physikalischen Rauschprozeß wie einem thermischen Rauschen eines Widerstands oder einem Schrotrauschen einer Diode basiert.

12. Datenverarbeitungsvorrichtung nach einem der vorhergehenden Ansprüche, die als Sicherheits-IC oder als Prozessor für eine Chipkarte mit eigener Batterie oder für Kontaktlosanwendungen implementiert ist.

13. Datenverarbeitungsvorrichtung nach einem der vorhergehenden Ansprüche, bei der der eine Betriebsmodus der Normal-Betriebsmodus ist, in dem ein Normal-Leistungsverbrauch stattfindet, und bei der der andere Betriebsmodus der Reduziert-Betriebsmodus ist.

14. Datenverarbeitungsvorrichtung nach einem der vorhergehenden Ansprüche,
bei der das Datenverarbeitungsmodul ferner in einem dritten Betriebsmodus betreibbar ist, wobei ein Leistungsverbrauch in dem dritten Betriebsmodus größer als der Leistungsverbrauch in dem zweiten Betriebsmodus ist,
wobei die Einrichtung (30) zum Versetzen ausgebildet ist, um das Datenverarbeitungsmodul in den dritten Betriebsmodus zu versetzen, wenn das Steuersignal eine vorbestimmte Bedingung erfüllt.

15. Verfahren zum Betreiben eines Datenverarbeitungsmoduls (10, 20), das in einem ersten Betriebsmodus mit einem ersten Leistungsverbrauch und einem zweiten Betriebsmodus betreibbar ist, wobei ein zweiter Leistungsverbrauch des Datenverarbeitungsmoduls in dem zweiten Betriebsmodus kleiner als der erste Leistungsverbrauch ist oder gleich 0 ist, mit folgenden Schritten:
Erhalten (32) eines zeitlich variierenden Steuersignals; und
Überprüfen (30a), ob das Steuersignal eine vorbestimmte Bedingung erfüllt;
**gekennzeichnet durch** folgende Schritte:
Erfassen (12) einer Möglichkeit, dass das Datenverarbeitungsmodul von einem Betriebsmodus in den anderen Betriebsmodus versetzbar ist; und
Versetzen (30) des Datenverarbeitungsmoduls (10, 20) von einem Betriebsmodus in den anderen Betriebsmodus, nur dann, wenn der Schritt des Überprüfens ergibt, dass das Steuersignal die vorbestimmte Bedingung erfüllt und die Möglichkeit erfasst ist.

16. Verfahren nach Anspruch 15, bei dem das zeitlich variierende Steuersignal eine Folge von Zufallszahlen ist.

17. Verfahren nach Anspruch 16,
bei dem eine Mehrzahl von Datenverarbeitungsmodulen (10, 20) vorgesehen ist, und bei dem in dem Schritt des Überprüfens überprüft wird, ob eine vordefinierte Beziehung zwischen einer Zufallszahl der Folge von Zufallszahlen und einer Identifikation eines Datenverarbeitungsmoduls vorliegt.

## Claims

1. Data processing apparatus comprising:
a data processing module (10, 12), which can be operated in a first operating mode with a first power consumption and a second operating mode, wherein a second power consumption of the data processing module in the second operating mode is smaller than the first power consumption or is equal to zero;
means (34) for providing a time-varying control signal; and
means (30) for placing the data processing module (10, 12) from one operating mode to the other operating mode,
**characterized in that**,
the data processing apparatus comprises means (12, 22) for signaling a possibility that the data processing module (10, 12) may be placed from one operating mode into the other operating mode; and
the means (30) for placing is formed to place the data processing module into the other operating mode only when the means (12, 22) for signaling signals the possibility and the control signal fulfils a predetermined condition.

2. Data processing apparatus according to claim 1,
wherein the means (34) for providing is formed to provide a sequence of random numbers as a control signal.

3. Data processing apparatus according to claim 1 or 2,
wherein the means (34) for providing is formed to provide a control signal with a plurality of different logical states, and
wherein the means (30) for placing is formed to use a logical state of the plurality of the logical states as the predetermined condition.

4. Data processing apparatus according to one of the previous claims,
wherein the means (30) for placing is formed to request a control signal when the possibility is signaled or to use a currently present control signal, to determine whether the predetermined condition is fulfilled.

5. Data processing apparatus according to one of the previous claims,
further comprising another data processing module (20), which can be operated in a normal operating mode with normal power consumption and in a reduced operating mode,
wherein a power consumption of the further data processing module (20) in the reduced operating mode is smaller than the normal power consumption or equal to zero;
further comprising another means (22) for signaling a possibility that the further data processing module (20) can be placed from one operating mode into the other operating mode; and
further comprising another means (30) for placing, for placing the further data processing module into the other operating mode, when the further means for signaling signals the possibility and the control signal fulfils a predetermined condition.

6. Data processing apparatus according to claim 5,
wherein an own data processing module identification (16, 26) is associated to every data processing module, and
wherein the means (30) for placing is formed to check, whether the control signal has a predetermined relationship with data processing module identification, so that the predetermined condition for the data processing module identification is fulfilled with the data processing module.

7. Data processing apparatus according to one of the previous claims, wherein the data processing module (10) is a CPU, and
wherein the means (12) for signaling the possibility is formed to signal a possibility when the CPU activates an external memory access.

8. Data processing apparatus according to one of the previous claims,
wherein the means (12, 22) for signaling is further formed to signal an end of the other operating mode, and
wherein means (30) for placing is formed to place the data processing module into the other operating mode at a signaled end of the other operating mode.

9. Data processing apparatus according to one of the previous claims,
formed to perform a data processing task in several timely subsequent passes, and
wherein means (34) for providing is formed to provide the control signal for different passes in a different way.

10. Data processing apparatus according to one of the previous claims,
wherein the means (34) for providing comprises a physical random number generator.

11. Data processing apparatus according to claim 10,
wherein the physical random number generator is based on a physical noise process, such as a thermal noise of a resistor or a shot noise of a diode.

12. Data processing apparatus according to one of the previous claims, which is formed as a security IC or as a processor for a chip card with its own battery or for contactless applications.

13. Data processing apparatus according to one of the previous claims, wherein the one operating mode is the normal operating mode, wherein normal power consumption takes place, and wherein the other operating mode is the reduced operating mode.

14. Data processing apparatus according to one of the previous claims,
wherein the data processing module can further be operated in a third operating mode, wherein a power consumption in the third operating mode is higher than the power consumption in the second operating mode,
wherein the means (30) for placing is formed to place the data processing module into the third operating mode, when the control signal fulfils a predetermined condition.

15. Method for operating a data processing module (10, 20), which can be operated in a first operating mode with a first power consumption and in a second operating mode,
wherein a second power consumption of the data processing module in the second operating mode is smaller than the first power consumption or equal to zero, comprising:
obtaining (32) a time-varying control signal;
checking (30a), whether the control signal fulfils a predetermined condition; and
**characterized by** the steps of:
detecting (12) a possibility that the data processing module can be placed from one operating mode into the other operating mode;
placing (30) the data processing module (10, 12) from one operating mode into the other operating mode, only when the step of checking shows that the control signal fulfils the predetermined condition and that the possibility is detected.

16. Method according to claim 15,
wherein the time-varying control signal is a sequence of random numbers.

17. Method according to claim 16,
wherein a plurality of data processing modules (10, 20) is provided and wherein it is checked in the step of checking, whether a predefined relationship is present between a random number of the sequence of random numbers and an identification of a data processing module.

## Revendications

1. Dispositif de traitement de données ayant des caractéristiques suivantes :
un module (10, 20) de traitement de données qui peut fonctionner dans un premier mode de fonctionnement en ayant une première consommation de puissance et dans un deuxième mode de fonctionnement, une deuxième consommation de puissance du module de traitement de données étant dans le deuxième mode de fonctionnement plus petite que dans la première consommation de puissance ou égale à 0 ;
un dispositif (34) destiné à fournir un signal de commande qui varie dans le temps ; et
un dispositif (30) pour faire passer le module (10, 20) de traitement de données d'un mode de fonctionnement à l'autre,
**caractérisé**
**en ce que** le dispositif de traitement de données a un dispositif (12, 22) de signalisation d'une possibilité que le module (10, 20) de traitement de données peut passer d'un mode de fonctionnement à l'autre ; et
**en ce que** le dispositif (30) pour passer d'un mode de données à l'autre est constitué de manière à ne faire passer le module de traitement de données dans l'autre mode de fonctionnement que si le dispositif (12, 22) de signalisation signale la possibilité et que si le signal de commande satisfait à une condition déterminée à l'avance.

2. Dispositif de traitement de données suivant la revendication 1,
dans lequel le dispositif (34) est conçu pour fournir comme signal de commande une suite de nombres aléatoires.

3. Dispositif de traitement de donnés suivant la revendication 1 ou 2,
dans lequel le dispositif (34) est conçu pour fournir un signal de commande ayant une multiplicité d'états logiques différents, et
dans lequel le dispositif (30) pour passer d'un mode de fonctionnement à l'autre est constitué pour utiliser comme condition déterminée à l'avance un état logique parmi la multiplicité d'états logiques.

4. Dispositif de traitement de données suivant l'une des revendications précédentes,
dans lequel le dispositif (30) de passage d'un mode de fonctionnement à l'autre est constitué pour offrir, lors d'une signalisation de la possibilité, un signal de commande ou pour utiliser un signal de commande actuellement présent pour constater si la condition déterminée à l'avance est satisfaite.

5. Dispositif de traitement de données suivant l'une des revendications précédentes,
qui comporte, en outre, un autre module (20) de traitement de données qui peut fonctionner dans un mode de fonctionnement normal en ayant une consommation de puissance normale et dans un mode de fonctionnement réduit, une consommation de puissance de l'autre module (20) de traitement de données dans le mode de fonctionnement réduit étant plus petite que la consommation de puissance normale ou étant égale à 0 ;
qui comporte, en outre, un autre dispositif (22) de signalisation d'une possibilité que l'autre module (20) de traitement de données peut passer d'un mode à l'autre ; et
qui comporte, en outre, un autre dispositif (30) de passage d'un mode de fonctionnement à l'autre pour faire passer l'autre module de traitement de données dans l'autre mode de fonctionnement lorsque l'autre dispositif de signalisation signale la possibilité et lorsque le signal de commande satisfait à une condition déterminée à l'avance.

6. Dispositif de traitement de données suivant la revendication 5,
dans lequel il est associé à chaque module de traitement de données une identification (16, 26) propre du module de traitement de données ; et
dans lequel le dispositif (30) de passage d'un mode de fonctionnement à l'autre est constitué pour contrôler si le signal de commande a un rapport déterminé à l'avance à l'identification du module de traitement de données, de sorte que la condition déterminée à l'avance pour le module de traitement de données soit satisfaite par l'identification du module de traitement de données.

7. Dispositif de traitement de données suivant l'une des revendications précédentes,
dans lequel le module (19) de traitement de données est une CPU ; et
dans lequel le dispositif (12) de signalisation de la possibilité est constitué pour signaler une possibilité lorsque la CPU active un accès extérieur à une mémoire.

8. Dispositif de traitement de données suivant l'une des revendications précédentes,
dans lequel le dispositif (12, 22) de signalisation est constitué, en outre, pour signaler une fin de l'autre mode de fonctionnement ; et
dans lequel le dispositif (30) de passage d'un mode de fonctionnement à l'autre est constitué pour faire passer, lorsqu'une fin de l'autre mode de fonctionnement est signalée, le module de traitement de données dans l'autre mode de fonctionnement.

9. Dispositif de traitement de données suivant l'une des revendications précédentes,
qui est constitué pour effectuer une tâche de traitement de données en plusieurs passages se succédant dans le temps ; et
dans lequel le dispositif (34) de fourniture d'un signal est constitué pour fournir le signal de commande différemment pour des passages différents.

10. Dispositif de traitement de données suivant l'une des revendications précédentes,
dans lequel le dispositif (34) pour fournir un signal comporte un générateur physique de nombres aléatoires.

11. Dispositif de traitement de données suivant la revendication 10,
dans lequel le générateur physique de nombres aléatoires repose sur un processus physique de bruit, comme un bruit thermique d'une résistance ou un bruit de grenaille d'une diode.

12. Dispositif de traitement de données suivant l'une des revendications précédentes,
qui est mis en oeuvre sous la forme d'un CI de sécurité ou d'un processeur pour une carte à puce ayant son propre générateur électrochimique ou pour des applications sans contact.

13. Dispositif de traitement de données suivant l'une des revendications précédentes,
dans lequel l'un des modes de fonctionnement est le mode de fonctionnement normal dans lequel a lieu une consommation de puissance normale et dans lequel l'autre mode de fonctionnement est le mode de fonctionnement réduit.

14. Dispositif de traitement de données suivant l'une des revendications précédentes,
dans lequel le module de traitement de données peut fonctionner, en outre, dans un troisième mode de fonctionnement, une consommation de puissance dans le troisième mode de fonctionnement étant plus grande que la consommation de puissance dans le deuxième mode de fonctionnement ; et
le dispositif (30) de passage d'un mode de fonctionnement à l'autre étant constitué pour faire passer le module de traitement de données dans le troisième mode de fonctionnement lorsque le signal de commande satisfait à une condition déterminée à l'avance.

15. Procédé pour faire fonctionner un module (10, 20) de traitement de données,
qui peut fonctionner dans un premier mode de fonctionnement ayant une première consommation de puissance et dans un deuxième mode de fonctionnement, une deuxième consommation de puissance du module de traitement de données dans le deuxième mode de fonctionnement étant plus petite que la première consommation de puissance ou étant égale à 0, comprenant des stades suivants :
on obtient (32) un signal de commande variable dans le temps ; et
on contrôle (30a) si le signal de commande satisfait à une condition déterminée à l'avance ;
**caractérisé par** des stades suivants :
on détecte (12) une possibilité que le module de traitement de données puisse passer d'un mode de fonctionnement à l'autre ; et
on fait passer (30) le module (10, 20) de traitement de données d'un mode de fonctionnement à l'autre seulement lorsque le stade de contrôle indique que le signal de commande satisfait à une condition déterminée à l'avance et seulement lorsque la possibilité est détectée.

16. Procédé suivant la revendication 15,
dans lequel le signal de commande variable dans le temps est une suite de nombres aléatoires.

17. Procédé suivant la revendication 16,
dans lequel il est prévu une multiplicité de modules (10, 20) de traitement de données et dans lequel dans le stade du contrôle, on contrôle s'il y a une relation définie à l'avance entre un nombre aléatoire de la suite de nombres aléatoires et une identification d'un module de traitement de données.
